Europäisches Patentamt

European Patent Office

Office européen des brevets

(11) Numéro de publication : **0 034 540**
**B1**

# (12) FASCICULE DE BREVET EUROPÉEN

(45) Date de publication du fascicule du brevet :
26.10.83

(21) Numéro de dépôt : 81400234.1

(22) Date de dépôt : 16.02.81

(51) Int. Cl.³ : **B 60 B 11/02**, B 60 B 15/26

(54) Dispositif de roues jumelées pour tracteurs et engins analogues.

(30) Priorité : 15.02.80 FR 8003540

(43) Date de publication de la demande :
26.08.81 Bulletin 81/34

(45) Mention de la délivrance du brevet :
26.10.83 Bulletin 83/43

(84) Etats contractants désignés :
AT BE CH DE FR GB IT LI LU NL SE

(56) Documents cités :
FR A 2 329 459
GB A 2 031 351
US A 3 237 992
US A 3 464 739
US A 3 893 689
US A 4 005 907

(73) Titulaire : **LA CENTRALE DU PNEU**
**77, rue des Chantiers**
**F-78000 Versailles (FR)**

(72) Inventeur : **Guerrier, Claude**
**57, rue Louis Blériot**
**F-78530 BUC (FR)**

(74) Mandataire : **Boivin, Claude**
**9, rue Edouard-Charton**
**F-78000 Versailles (FR)**

EP 0 034 540 B1

Jouve, 18, rue St-Denis, 75001 Paris, France

Dispositif de roues jumelées pour tracteurs et engins analogues

La présente invention concerne un dispositif propre à fixer une seconde roue sur la roue motrice d'un tracteur ou engin analogue. Il est avantageux de munir de roues jumelées l'essieu moteur des tracteurs ou engins analogues. Ce jumelage augmente la capacité de charge du tracteur, améliore son adhérence et entraîne un tassement moins important du sol.

Mais beaucoup de tracteurs ne comportent de chaque côté qu'une roue motrice unique. On a proposé divers dispositifs permettant de fixer une seconde roue sur une roue motrice, avec interposition d'une virole formant entretoise. Ces dispositifs sont difficiles à réaliser, car ils doivent transmettre à la seconde roue le couple moteur qui est important. La plupart d'entre eux ne donnent pas satisfaction, car ils nécessitent des soudures sur la jante de la roue motrice et comportent des moyens d'accrochage sur les bords de la jante de la deuxième roue.

La surface intérieure de la jante d'une roue motrice d'un tracteur comporte en général un disque annulaire, percé de trous, qui est soudé à la jante ou boulonné sur des pontets eux-mêmes soudés à la jante.

Le brevet américain US-A-3 464 739 décrit un dispositif pour fixer une seconde roue sur une roue motrice d'un tracteur ou engin analogue, qui est utilisable dans ce cas et comprend un barillet annulaire et une série de tendeurs dont une extrémité porte des moyens d'accrochage aux pontets ou au disque de la jante de la roue motrice.

Ce barillet comprend un anneau qui a un diamètre lui permettant de prendre appui sur un repli de la jante de la seconde roue et sous lequel sont fixées des plaques portant chacune un tendeur.

Lors de la mise en place du barillet, les plaques viennent prendre appui sur la partie cylindrique de la jante de la seconde roue. Il est de ce fait nécessaire de prévoir un barillet pour chaque profil de jante, en particulier pour chaque diamètre de jante. Par ailleurs, les tendeurs ont pour effet d'appliquer fermement les plaques sur la partie cylindrique. Il en résulte qu'il est ensuite extrêmement difficile, voire impossible, de retirer par la suite le barillet si on désire enlever la seconde roue. C'est, en particulier, le cas d'un tracteur agricole qui a été utilisé dans un champ dans lequel on a épandu des engrais corrosifs ; sous l'influence de ces engrais, les roues rouillent plus ou moins et les plaques du barillet sont pratiquement collées par la rouille à la jante de la seconde roue.

La présente invention a pour objet un dispositif du type ci-dessus mais qui peut être utilisé avec des roues dont les jantes présentent des profils différents, notamment des diamètres différents, et qui peut être retiré sans difficultés après une campagne de travail.

Le dispositif selon l'invention comporte un barillet annulaire et une série de tendeurs ayant chacun une extrémité pouvant être fixée aux pontets ou au disque annulaire de la jante de la roue motrice par l'intermédiaire de moyens d'accrochage, le barillet comprenant un anneau ayant un diamètre lui permettant de prendre appui sur un repli de la surface intérieure de la jante de la séconde roue, anneau sur la face interne duquel sont fixées des plaques reliées chacune à l'autre extrémité d'un tendeur, et est caractérisé en ce que le barillet comprend en outre un deuxième anneau disposé à l'extrémité des plaques située du côté intérieur par rapport au tracteur et fixé sur les faces de ces plaques tournées vers l'axe de la roue, ce deuxième anneau ayant un diamètre tel que les plaques soient écartées de la surface cylindrique interne de la jante, empêchant ainsi ces plaques de venir au contact de la jante lorsque les tendeurs sont sous tension.

Il est ainsi possible d'engager le barillet dans la jante de la seconde roue, quel que soit le diamètre de la partie cylindrique de cette jante, à condition uniquement que ce diamètre soit inférieur à celui du cylindre inscrit dans ces plaques. Par ailleurs, les plaques n'étant pas au contact de la partie cylindrique de la jante, le retrait du barillet, donc celui de la seconde roue, se fait sans difficultés lorsque les tendeurs ont été mis hors d'action.

On a décrit ci-après, à titre d'exemple non limitatif, un mode de réalisation du dispositif selon l'invention avec référence aux dessins annexés dans lesquels :

La Figure 1 montre schématiquement un tracteur muni de roues jumelées ;

La Figure 2 est une vue en coupe axiale des roues jumelées ;

La Figure 3 représente, à plus grande échelle un détail de la figure 2 ;

La Figure 4 est une coupe transversale suivant IV-IV de la figure 3 ;

La Figure 5 est une vue de détail montrant l'extrémité d'un tendeur articulée sur le barillet, ce tendeur étant dans sa position de mise en place.

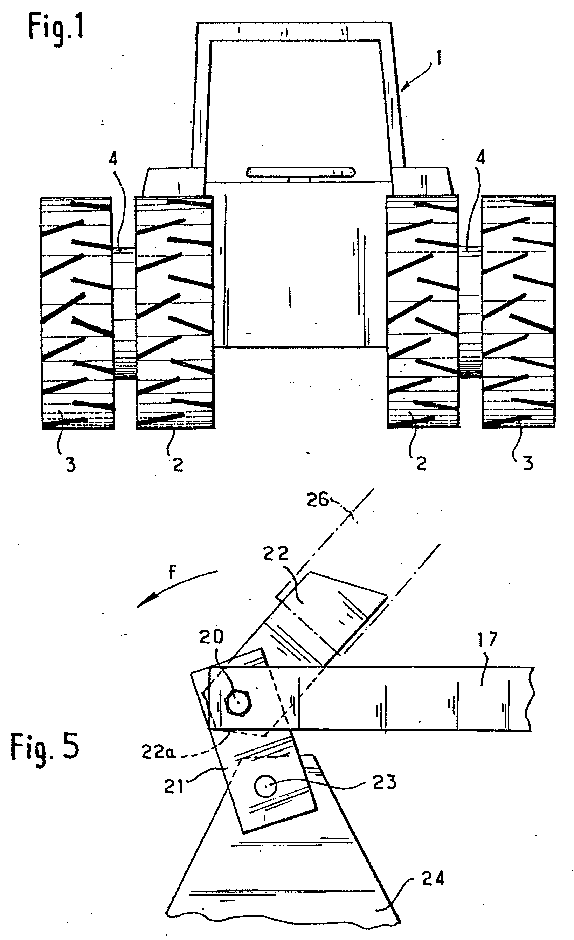

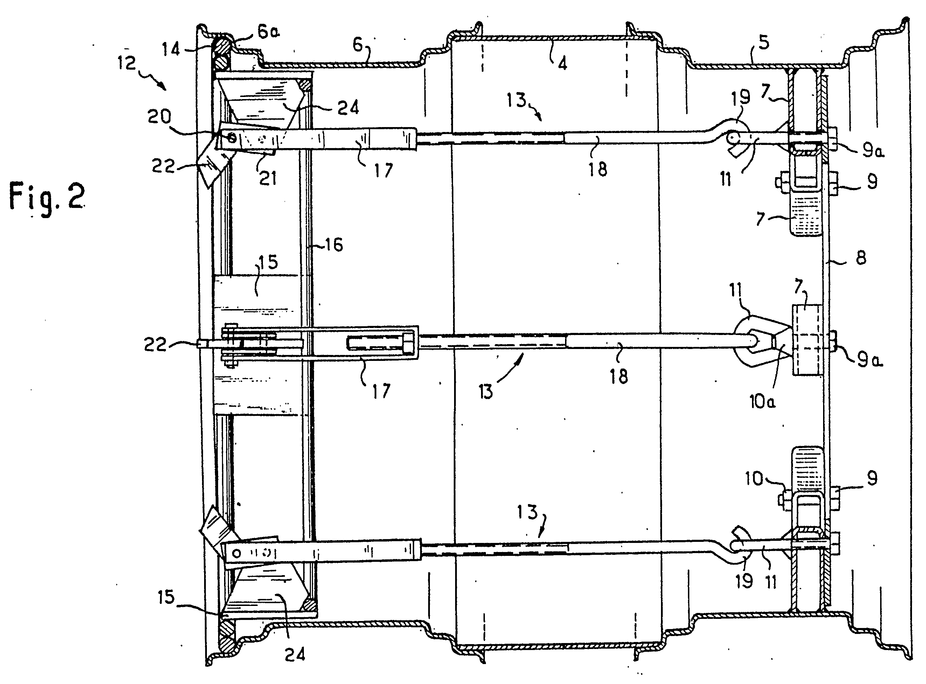

A la Figure 1, on voit un tracteur 1 comportant des roues motrices 2 auxquelles sont jumelées des roues 3 séparées des roues 2 par des viroles 4 formant entretoises. Les jantes des roues 2 et 3 sont représentées respectivement en 5 et 6 à la Figure 2.

A l'intérieur de la jante 5 de chacune des roues motrices 2 sont soudés des pontets 7 qui sont au nombre de huit dans l'exemple représenté. Un disque 8 est fixé aux pontets 7 par des boulons 9 et 9a ; les boulons 9 sont vissés dans des écrous 10 alors que les boulons 9a qui sont alternés avec les boulons 9 et légèrement plus longs que ceux-ci, sont vissés dans des écrous 10a solidaires d'une anse 11.

Chaque roue 3 est fixée à la roue motrice adjacente 2, la virole 4 étant serrée entre les deux roues, par un barillet désigné d'une façon générale par la référence 12 et une série de tendeurs désignés chacun d'une façon générale par la référence 13.

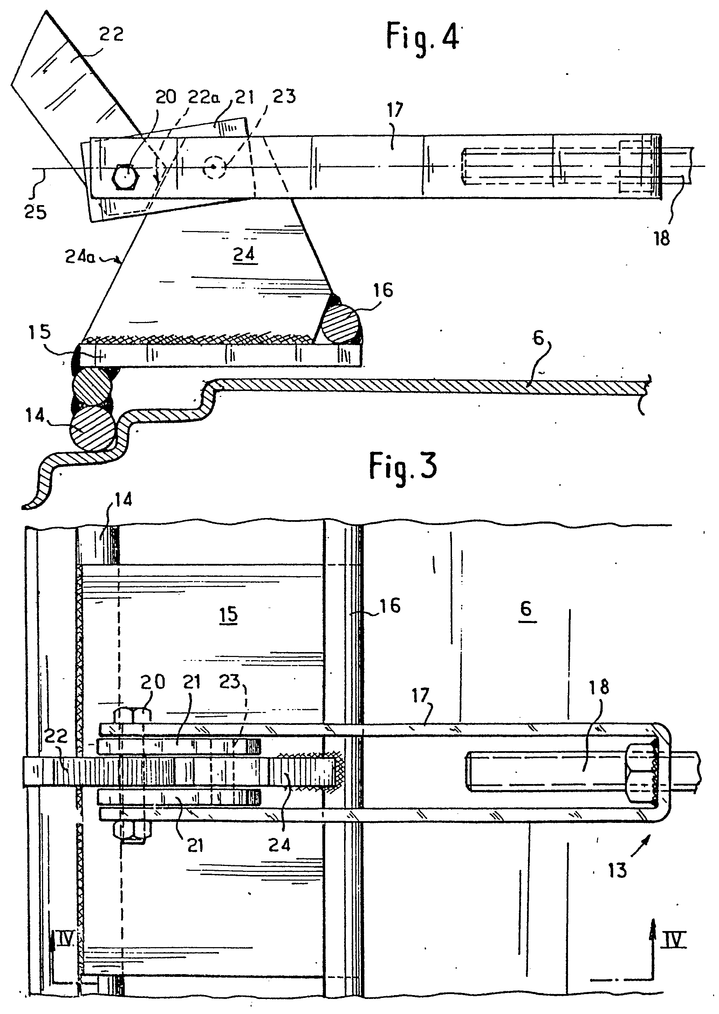

Le barillet 12 comprend un anneau 14 sur lequel sont fixées des plaques 15 qui, dans l'exemple représenté, sont disposées à 90° les unes des autres. Un anneau 16 coaxial à l'anneau 14 est fixé sur les plaques 15. L'anneau 14 a un diamètre tel qu'il puisse prendre appui sur un repli annulaire 6a de la jante 6, comme on le voit à la Figure 2. L'anneau 16 a un diamètre tel que les plaques 15 soient écartées de la surface cylindrique de la jante 6, comme on le voit à la Figure 4, même lorsque les tendeurs 13 sont sous tension.

Chacun des tendeurs 13 comprend un étrier 17 dans lequel est vissée une tige filetée 18 terminée par un crochet 19.

L'étrier 17 est monté pivotant en 20 sur un élément de serrage formé par deux flasques 21 entre lesquels est interposée une poignée de serrage 22 solidaire de ces flasques. Cet élément de serrage est monté pivotant en 23 sur une plaque de support 24 soudée au milieu d'une plaque 15, perpendiculairement à celle-ci. L'axe du pivot 20 est situé, à la Figure 4, légèrement en dessous de l'axe 25 du tendeur.

La face extérieure 24a de la plaque 24 est oblique et la poignée 22 est terminée par une face oblique 22a qui vient s'appliquer sur la face extérieure 24a de la plaque 24 lorsque l'axe 20 a dépassé légèrement l'axe 25.

Pour fixer une roue 3 à une roue motrice 2, on applique une virole 4 sur la jante 5 de la roue 2, et on applique la jante 6 de la roue 3 sur le véhicule 4. Puis on applique le barillet 12 sur la jante 6 de façon que les tendeurs 13 se trouvent en regard des écrous à anse 10a. Les tendeurs ayant été amenés à la longueur convenable par vissage ou dévissage des tiges filetées 18 dans les étriers 17, on fait basculer les flasques 21 pour les amener dans la position de la Figure 5 et on engage dans les anses 11 les crochets 19 terminant les tiges 18. Il ne reste plus qu'à faire pivoter les flasques 21 de chaque tendeur, dans le sens de la flèche f, à l'aide de la poignée 22. Lorsque la position de point mort dans laquelle l'axe du pivot 20 rencontre l'axe 25 du tendeur, est dépassée, la force de traction tend à appliquer la face 22a de la poignée sur la face 24a de la plaque de support 24, de sorte que le tendeur est verrouillé en position. Pour faciliter la manœuvre de la poignée 22, on peut enfiler sur celle-ci un manchon 26.

Il va de soi que la présente invention ne doit pas être considérée comme limitée au mode de réalisation décrit et représenté.

## Revendication

Dispositif de fixation d'une seconde roue sur une roue motrice d'un tracteur ou engin analogue, la jante (5) de cette roue motrice comportant un disque annulaire (8) percé de trous et soudé à la jante (5) ou boulonné sur des pontets (7) eux-mêmes soudés à la jante (5), dispositif de fixation comprenant un barillet annulaire (12) et une série de tendeurs (13) ayant chacun une extrémité pouvant être fixée aux pontets (7) ou au disque annulaire (8) par l'intermédiaire de moyens d'accrochage (11,19), le barillet comprenant un anneau (14) ayant un diamètre lui permettant de prendre appui sur un repli de la surface intérieure de la jante (6) de la seconde roue, anneau sur la face interne duquel sont fixées des plaques (15) reliées chacune à l'autre extrémité d'un tendeur (13), caractérisé en ce que le barillet (12) comprend en outre un deuxième anneau (16) disposé à l'extrémité des plaques (15) située du côté intérieur par rapport au tracteur et fixé sur les faces de ces plaques tournées vers l'axe de la roue, ce deuxième anneau (16) ayant un diamètre tel que les plaques (15) soient écartées de la surface cylindrique interne de la jante (6), empêchant ainsi ces plaques de venir au contact de la jante (6) lorsque les tendeurs (13) sont sous tension.

## Claim

Device for fixing a second wheel on a driving wheel of a tractor or like machine, the rim (5) of this driving wheel comprising an annular disc (8) pierced with holes and welded to the rim (5) or bolted on connector elements (7) themselves welded to the rim (5), fixing device comprising an annular barrel (12) and a series of tension devices (13) each having one end adapted to be fixed to the connector elements (7) or to the annular disc (8) via hooking means (11, 19), the barrel comprising a ring (14) having a diameter enabling it to abut on a fold of the inner surface of the rim (6) of the second wheel, on the inner face of which ring are fixed plates (15) each connected to the other end of a tension device (13), characterized in that the barrel (12) further comprises a second ring (16) disposed at the end of the plates (15) located on the inner side with respect to the tractor and fixed on the faces of these plates facing the axis of the wheel, this second ring (16) having a diameter such that the plates (15) are moved apart from the inner cylindrical surface of the rim (6), thus preventing these plates from coming into contact with the rim (6) when the tension devices (13) are tensioned.

## Anspruch

Vorrichtung zur Befestigung eines zweiten Rades an einem Antriebsrad eines Traktors oder einer ähnlichen Maschine, wobei die Felge (5) dieses Antriebsrades eine ringförmige Scheibe (8) aufweist, welche mit Löchern versehen und an der Felge (5) angeschweißt oder an an der Felge (5) selber angeschweißten Bügeln (7) angeschraubt ist, und die Befestigungsvorrichtung eine ringförmige Trommel (12) und eine Reihe von Spannschrauben (13) mit je einem Ende aufweist, welches an den Bügeln (7) oder der ringförmigen Scheibe (8) mittels einer Einhängevorrichtung (11, 19) befestigt werden kann, und wobei die Trommel einen Ring (14) mit einem Durchmesser aufweist, der es ihr ermöglicht, an einer Hohlkehle an der Innenfläche der Felge (6) des zweiten Rades anzuliegen, und wobei an der Innenfläche des Ringes Platten (15) befestigt sind, von denen jede mit dem anderen Ende einer Spannschraube (13) verbunden ist, dadurch gekennzeichnet, daß die Trommel (12) außerdem einen zweiten Ring (16) aufweist, welcher an dem Ende der Platten (15) angeordnet ist, das an der Innenseite in bezug auf den Traktor liegt und an den zur Achse des Rades hin gewandten Seiten dieser Platten befestigt ist, wobei dieser zweite Ring (16) einen derartigen Durchmesser aufweist, daß die Platten (15) von der inneren zylindrischen Obefläche der Felge (6) einen Abstand aufweisen, so daß auf diese Weise verhindert wird, daß die Platten mit der Felge (6) in Berührung kommen, wenn sich die Spannschrauben (13) unter Spannung befinden.

Fig.1

1

4

4

3

2

2

3

26

22

f

20

17

22a

21

Fig. 5

23

24

1

Fig. 2

0 034 540

# Fig. 4

# Fig. 3